(19) Europäisches Patentamt
European Patent Office
Office européen des brevets

(11) Numéro de publication: 0 327 473 A2

(12) # DEMANDE DE BREVET EUROPEEN

(21) Numéro de dépôt: 89420021.1

(22) Date de dépôt: 27.01.89

(51) Int. Cl.[4]: C 07 F 5/04
C 07 C 37/20, C 07 C 39/11

(30) Priorité: 01.02.88 FR 8801324

(43) Date de publication de la demande:
09.08.89 Bulletin 89/32

(84) Etats contractants désignés:
AT BE CH DE ES FR GB GR IT LI LU NL SE

(71) Demandeur: RHONE POULENC CHIMIE
25 Quai Paul Doumer
F-92408 Courbevoie Cédex (FR)

(72) Inventeur: Cordier, Georges
50, Chemin des Hermières
F-69340 Francheville (FR)

(74) Mandataire: Vignally, Noel et al
Rhône-Poulenc Interservices Service Brevets Chimie
Centre de Recherches des Carrières B.P. 62
F-69192 Saint-Fons Cédex (FR)

(54) **Procédé de préparation de métaborate d'aryle et son application à la préparation des alcools orthohydroxybenzyliques.**

(57) L'invention concerne un procédé de préparation de métaborates d'aryle qui comporte une étape de déshydratation de l'acide borique en acide métaborique avec distillation azéotropique de l'eau formée puis une étape d'estérification de l'acide métaborique et son application à la préparation des alcools orthohydroxybenzyliques par condensation des métaborates d'aryles avec le formaldéhyde ou un générateur de formaldéhyde. Elle convient tout particulièrement bien à la préparation du saligénol.

EP 0 327 473 A2

## Description

## PROCEDE DE PREPARATION DE METABORATE D'ARYLE ET SON APPLICATION A LA PREPARATION DES ALCOOLS ORTHOHYDROXYBENZYLIQUES

La présente invention a pour objet un procédé de préparation de métaborates d'aryle et plus particulièrement du métaborate de phényle et son application à la préparation des alcools orthohydroxybenzyliques et en particulier de l'alcool orthohydroxybenzylique, par condensation du formaldéhyde ou d'un composé générateur de formaldéhyde avec lesdits métaborates d'aryle.

On sait que les alcools orthohydroxybenzyliques et notamment l'alcool orthohydroxybenzylique, plus communément dénommé saligénol, sont des produits intermédiaires recherchés pour la préparation des acides orthohydroxyméthylphénylacétiques utilisés comme régulateur de croissance des plantes et que le saligénol lui-même constitue un produit industriel important tant par ses propriétés pharmacologiques que comme intermédiaire pour la préparation d'insecticides.

On sait encore que les alcools orthohydroxybenzyliques sont préparés industriellement par réaction du formaldéhyde ou d'un composé générateur de formaldéhyde tel que la trioxyméthylène avec des borates d'aryle, avec formation de borates des alcools orthohydroxybenzyliques puis décomposition de ces borates par saponification au moyen d'une solution aqueuse alcaline. De tels procédés ont été décrits notamment dans le brevet français n° 1 338 945 et dans le brevet français n° 78 21 591 publié sous le n° 2 430 928. La préparation des borates d'aryle constitue une étape clef de ce procédé. En règle générale elle est réalisée par réaction directe d'un phénol avec l'acide borique dans un solvant permettant de procéder à la distillation azéotropique de l'eau résultant de la réaction tel que les hydrocarbures aromatiques halogénés ou non (toluène, xylène, chlorobenzène par exemple). Dans ces conditions la réaction conduit à des mélanges complexes d'esters boriques constitués essentiellement :

- de métaborates d'aryle sous forme monomère de formule $Ar-O-B=O$ (I) ou sous forme trimérisée de formule :

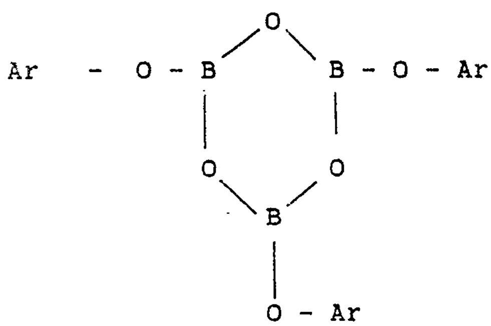

(II)

- d'orthoborates d'aryle de formule $(Ar-O)_3\ B$ (III)
- de borates acides d'aryle de formule $(Ar-O)_2\ B-OH$ (IV)

dans lesquelles Ar représente un radical phényle substitué ou non) et dont la composition est variable selon les conditions de la réaction. Ces différents borates ne participent pas avec le même succès à la formation ultérieure des alcools orthohydroxybenzyliques. En particulier les composés (III) et (IV) conduisent lors de la réaction de formylation ultérieure à la formation respectivement de borates mixtes d'alcools orthohydroxybenzyliques et de monoaryle. Lors de l'hydrolyse alcaline ces composés libèrent respectivement 2 moles et 1 mole de phénols par mole d'alcoolhydroxylbenzylique formé. La productivité de la réaction de formation des alcools orthohydroxybenzyliques relativement au phénol est donc diminuée par la présence des composés (III) et (IV). Outre qu'il ne permet pas d'obtenir sélectivement des métaborates d'aryle le procédé décrit dans le brevet français 1 338 945 conduit à des rendements en saligénol exprimés par rapport au phénol et au formaldéhyde de l'ordre de 65 % seulement. On a proposé dans le brevet français n° 78/21 591 d'augmenter les rendements en alcools orthohydroxybenzyliques en conduisant l'étape de formation des borates d'aryle en présence d'un excès de phénol afin de favoriser la formation des orthoborates d'aryle. Bien que l'objectif poursuivi ait été atteint ce procédé ne permet pas de résoudre le problème posé par la productivité de la réaction : les phénols non transformés en alcools orthohydroxybenzyliques doivent être récupérés et recyclés à la phase de préparation des borates d'aryle ce qui complique le procédé. En définitive les procédés de l'art antérieur ne permette pas de résoudre à la fois le problème posé d'une part par l'amélioration de la productivité de la réaction et d'autre part par l'amélioration des rendements en alcools orthohydroxybenzyliques résultant de la formylation des borates d'aryle. L'industrie est par conséquent à la recherche d'un procédé de préparation des borates d'aryle qui conduise de façon pratiquement exclusive à la formation des métaborates d'aryle lesquels conduisent quantitativement aux métaborates d'alcools orthohydroxybenzyliques lors de leur formylation.

Un premier objet de la présente invention réside donc dans un procédé sélectif de préparation de

métaborates d'aryle.

Un second objet de la présente invention réside dans l'application d'un procédé sélectif de préparation de métaborates d'alkyle à l'obtention d'alcools orthohydroxybenzyliques mettant en oeuvre une étape de formylation des métaborates d'alkyle en métaborates d'alcools orthohydroxybenzyliques puis une étape de saponification de ces derniers, permettant d'élever la productivité du procédé.

Un troisième objet de la présente invention réside dans un procédé d'obtention d'alcools orthohydroxybenzyliques par formylation de borates d'alkyles puis saponification de borates d'alcools orthohydroxybenzyliques qui permet d'améliorer les rendements en ces derniers exprimés par rapport au phénol ou au formaldéhyde.

Plus spécifiquement un premier objet de la présente invention réside dans un procédé de préparation de métaborates d'aryle à partir d'acide borique et de phénols caractérisés en ce que, dans une première étape, on procède à la déshydratation de l'acide borique en acide métaborique à température inférieure ou égale à 145° C par distillation azéotropique en présence d'un solvant formant avec l'eau un azéotrope de point d'ébullition inférieur ou égal à 170° C puis, dans une deuxième étape, on réalise l'estérification d'un phénol par l'acide métaborique à température inférieure à 170° C en distillant azéotropiquement l'eau de la réaction au fur et à mesure de la formation.

On a constaté qu'en opérant de cette façon on obtient exclusivement des métaborates d'aryles avec des rendements supérieurs ou égaux à 95 % par rapport à l'acide borique initial et aux phénols.

Comme solvant convenant à la mise en oeuvre du procédé selon l'invention on peut faire appel à tout composé formant avec l'eau un azéotrope de point d'ébullition inférieur à 170° C à pression normale ou sous pression réduite. Ils peuvent être choisis dans le groupe des hydrocarbures aromatiques, alkylaromatiques halogénés ou non. Comme exemples de solvants on peut citer à titre non limitatif le xylène, le diisopropylbenzène, le triméthyl-1,2,4-benzène.

La température à laquelle est conduite la déshydratation de l'acide borique en acide métaborique ($HBO_2$) puis l'estérification de ce dernier par un phénol est avantageusement comprise entre 130 et 160° C et, de préférence entre 130 et 155° C. Plus précisément la phase de déshydratation de l'acide borique est conduite à une température comprise entre 130 et 145° C et la phase d'estérification à une température comprise entre 140 et 155° C. La concentration de l'acide borique puis du phénol dans le solvant choisi est adaptée de façon à ce que la température soit maintenue à une valeur inférieure aux valeurs indiquées précédemment pendant la phase d'élimination de l'eau de la réaction.

La quantité de phénol mise en oeuvre lors de l'estérification est de préférence voisine de la quantité stoechiométrique c'est-à-dire voisine de 1 mole de phénol par mole d'acide métaborique. On pourrait cependant s'écarter quelque peu de la stoechiométrie sans sortir pour autant du cadre de la présente invention.

Les phénols qui conviennent à la mise en oeuvre de la présente invention peuvent être représentés par la formule générale :

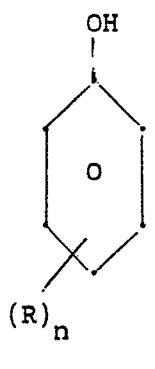

(V)

dans laquelle n est un nombre entier de 1 à 3 et R représente : un radical alcoyle ayant de 1 à 12 atomes de carbone et de préférence de 1 à 4 tels que méthyle, éthyle, propyles, butyles, hexyles, octyles ; un radical alcoyloxyle ayant de 1 à 12 et de préférence de 1 à 4 atomes de carbone tels que les groupes méthoxy, éthoxy, propoxy, butoxy ; un atome d'halogène tel que le chlore et le brome. Lorsque n est supérieur à 1 l'une au moins des positions en ortho du groupe phénolique doit être libre.

Comme exemples de phénols de formule (V) on peut citer le phénol, les crésols, le xylénol-2,3, le xylénol-3,4, les monoéthylphénols, le méthoxy-2 phénol, le méthoxy-3 phénol, le méthoxy-4 phénol, le diméthoxy-2,3 phénol, l'éthoxy-2 phénol, l'éthoxy-4 phénol, les monochlorophénols.

D'un point de vue pratique le procédé de l'invention est simple à mettre en oeuvre. Il suffit en effet de charger l'acide borique dans la quantité adéquate du solvant choisi puis de porter l'ensemble sous agitation à la température de reflux du mélange et de soutirer l'azéotrope eau/solvant jusqu'à élimination de la quantité théorique d'eau ; le solvant est séparé de l'eau et recyclé. Lorsque la déshydration est terminée on ajoute

progressivement une solution d'un phénol dans la quantité adéquate du solvant choisi qui est, de préférence, le même que celui utilisé à l'étape de déshydratation de l'acide borique. La masse réactionnelle est portée à reflux et l'eau formée éliminée azéotropiquement. Le solvant contenant du phénol est séparé de l'eau et recyclé dans la masse réactionnelle. Lorsque la quantité théorique d'eau a été éliminée le mélange obtenu consistant en une solution organique de métaborate d'aryle est refroidit. Le métaborate peut alors être récupéré par les procédés usuels, par exemple par distillation du solvant sous pression réduite ou, conformément à un second objet de la présente invention, la solution organique de métaborate d'aryle peut être utilisée directement pour la préparation d'alcools orthohydroxybenzyliques.

Plus spécifiquement la présente invention a encore pour objet un procédé de préparation d'alcools orthohydroxybenzyliques par réaction de formaldéhyde ou d'un composé générateur de formaldéhyde avec des borates d'aryle pour former des borates d'alcools orthohydroxybenzyliques puis décomposition de ce dernier pour libérer les alcools orthohydroxybenzyliques caractérisé en ce que les borates d'aryle sont des métaborates obtenus par un procédé selon lequel on procède, dans une première étape, à la déshydratation de l'acide borique en acide métaborique à température inférieure à 140° C par distillation azéotropique en présence d'un solvant formant avec l'eau un azéotrope de point d'ébullition inférieur ou égal à 170° C puis, dans une deuxième étape, on réalise l'estérification d'un phénol par l'acide métaborique en distillant azéotropiquement l'eau de la réaction au fur et à mesure de sa formation à température inférieure à 170° C.

La condensation de formaldéhyde ou d'un générateur de formaldéhyde avec les métaborates d'aryle peut être conduite directement sur la solution de métaborate d'aryle pratiquement anhydre résultant de la phase d'estérification de l'acide métaborique, éventuellement après addition d'une quantité adéquate de solvant organique. Lorsqu'on utilise comme générateur de formaldéhyde un polymère tel que le trioxyméthylène celui-ci est ajouté à la solution organique de métaborate sous forme d'une suspension dans un solvant organique qui est de préférence la même que celui utilisé pour la préparation du métaborate.

Les conditions de la condensation formaldéhyde ou générateur/métaborates d'aryles peuvent être celles décrites dans les brevets français précités. Ainsi la quantité de formaldéhyde ou de générateur exprimée en moles de HCHO par mole de métaborate est de préférence voisine de la stoechiométrie, c'est-à-dire voisine d'une mole de HCHO par mole de métaborate bien que l'on puisse s'en écarter quelque peu ; ainsi elle peut être comprise entre 0,9 et 1 mole de HCHO par mole de métaborate, de préférence on opère en présence d'un léger excès de formaldéhyde.

La température de la réaction peut être comprise dans les limites de l'art antérieur, c'est-à-dire entre 20 et 120° C et de préférence entre 40 et 100° C. On a constaté cependant qu'il est préférable que la température de la condensation formaldéhyde/métaborate reste inférieure à 90° C et soit comprise avantageusement entre 80 et 85° C ; dans ces conditions les rendements en alcools orthohydroxybenzyliques sont les meilleurs. La sélection de ces conditions spécifiques de température constitue un autre aspect de la présente invention.

La condensation du formaldéhyde ou d'un générateur de formaldéhyde avec les métaborates d'alkyle peut être conduite à pression normale ou sous pression réduite ; dans ce dernier cas la pression est choisie de façon à ce que le solvant ne soit pas porté à ébullition à la température de la réaction.

Sur un plan pratique l'addition du formaldéhyde à la solution organique de métaborate peut être réalisée progressivement ou plus avantageusement en une seule fois.

La durée de la réaction de condensation dépend évidemment des conditions choisies. Lorsqu'elle est achevée on obtient une solution organique de métaborate d'alcool orthohydroxybenzylique qui est soumise aux traitements usuels en vue de libérer l'alcool orthohydroxybenzylique recherché, tels que ceux décrits dans le brevet français 1 338 945, c'est-à-dire la saponification, l'alcoolyse ou l'hydrolyse ; la saponification convient tout particulièrement bien. Il suffit alors de traiter la solution organique de métaborate d'alcool orthohydroxybenzylique par une solution aqueuse d'une base alcaline (soude ou potasse par exemple) à température ambiante pour provoquer la formation de sels alcalins complexes solubles dans l'eau. La couche organique et la couche aqueuse sont séparées et cette dernière est acidifiée pour libérer l'alcool orthohydroxybenzylique. Ce dernier est récupéré à partir de la solution aqueuse neutralisée par extraction au moyen d'un solvant approprié.

Le procédé selon la présente invention permet la préparation d'alcools orthohydroxybenzyliques de formule générale :

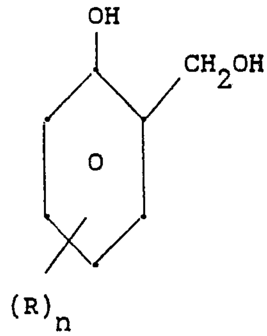

(VI)

dans laquelle R et n ont la signification donnée précédemment et convient tout particulièrement bien à la préparation du saligénol à partir du phénol.

Les exemples suivant illustrent l'invention et montrent comment elle peut être mise en pratique.

EXEMPLE 1

a) Dans un ballon en verre de 500 ml équipé d'un système d'agitation, d'une thermomètre, d'une ampoule de coulée, d'une colonne à distiller surmontée d'un condenseur et d'un séparateur on charge 110 ml de xylène anhydre et 38,9 g d'acide borique (0,6 mole) on met l'agitation en marche puis porte à reflux en distillant de façon contienue l'azéotrope xylène/eau ; on sépare l'eau du xylène et recycle ce dernier dans la masse réactionnelle. La température de cette dernière se maintient à 136 - 138° C pendant la durée de la distillation. Après 2 heures dans ces conditions on a recueilli 0,595 mole d'eau soit 99,16 % de l'eau qui aurait dû se former théoriquement. Il s'est donc formé quantitativement l'acide métaborique.

b) Au moyen de l'ampoule de coulée on ajoute progressivement, sous agitation, en 1 heure au contenu du ballon une solution de 56,4 g de phénol (0,6 mole) dans 50 ml de xylène, en chauffant à reflux. On élimine de façon continue l'eau ou la réaction par distillation de l'azéotrope eau/xylène qui entraîne du phénol. L'eau est séparée de la couche organique xylène/phénol qui est recyclée dans le milieu réactionnel. La température dans ce dernier est maintenue entre 145 et 150° C. Après 4 heures dans ces conditions on a recueilli 0,58 mole d'eau soit 93,6 % de l'eau qui aurait dû se former. On élimine alors 60 ml de xylène dans lesquel on a dosé 2 % du phénol chargé initialement.

La masse réactionnelle homogène à 70 - 75° C est analysée par RMN du carbone et du proton. On constate qu'elle est constituée par une solution du seul métaborate de phényle à l'exclusion de tout autre borate. La quantité de phénol résiduaire déterminée par RMN est inférieure à 3 %.

Le rendement réel du métaborate de phényle par rapport à l'acide borique ou au phénol engagé est donc supérieur à 95 %.

EXEMPLE 2

a) Dans l'appareil décrit à l'exemple 1 on a chargé 6,18 g de $H_3BO_3$ (0,1 mole) et 55 ml de xylène puis on a procédé comme à l'exemple 1. Après 80 min à 137° C on a récupéré 0,095 mole d'eau.

b) On ajoute à la masse réactionnelle précédente en 5 min une solution de 9,4 g (0,1 mole) de phénol dans 45 ml de toluène. La température de reflux s'élève à 145 - 153° C. Après 110 min dans ces conditions on a récupéré 0,095 mole d'eau.

L'analyse de la masse réactionnelle par RMN permet de constater qu'il s'est formé exclusivement du métaborate de phényle avec un rendement réel de 95 %.

EXEMPLE 3

On a répété l'exemple 2 après avoir remplacé le xylène par le triméthyl-1,2,4 benzène. On a recueilli aux phases a) et b) les mêmes quantités d'eau après les mêmes durées de chauffage à reflux (la température s'est élevée jusqu'à 165° C à l'étape b). Il s'est formé exclusivement du métaborate de phényle avec un rendement réel de 95 %.

EXEMPLE 4

On prépare du saligénol en opérant de la façon suivante :

Dans un ballon en verre de 500 ml équipé d'un dispositif d'agitation, d'un thermomètre, d'un réfrigérant ascendant, d'une ampoule de coulée et d'un système de chauffage régulé, on charge une solution de 0,57 mole de métaborate de phényle dans 100 ml de xylène obtenue par le procédé de l'exemple 1. On porte cette solution à 80° C sous agitation puis on ajoute en 10 min une suspension de 18 g (0,6 mole de HCHO) de trioxyméthylène dans 22 ml xylène. On maintient 1 heure sous agitation à 80° C puis ajoute 1,8 g de trioxyméthylène (0,06 mole de HCHO) en suspension dans 2,2 g de xylène. On maintient la masse réactionnelle encore 2 h 30 à la même température.

L'avancement de la réaction est suivi par analyse de prise d'échantillons de masse réactionnelle au moyen de la chromatographie liquide sous haute pression (CLHP) après hydrolyse par une solution aqueuse de

soude.

Le milieu réactionnel est refroidi à 20° C puis on lui ajoute en 1 heure, sous agitation, 280 ml d'une solution aqueuse de soude à 5 moles/litres. On laisse alors décanter la couche aqueuse alcaline de la couche organique et soutire la couche aqueuse. La couche organique est lavée 2 fois avec 200 ml d'eau chaque fois. Les eaux de lavage sont ajoutées à la couche aqueuse et le saligénol, le phénol et l'alcool parahydroxybenzylique sont dosés par CLHP.

On constate que le taux de transformation du borate de phényle (ou du phénol) s'élève à 92,2 % et que le rendement réel en saligénol atteint 87,3 % soit en rendement théorique (par rapport au métaborate de phényle transformé ou en phénol transformé) de 94,7 %. Il s'est également formé à côté du saligénol de l'alcool p-hydroxybenzylique avec un rendement réel de 5 %.

EXEMPLE 5

On a reproduit l'exemple 4 en conduisant la condensation due trioxyméthylène avec le métaborate de phényle à 90° C pendant 165 min. Les résultats ont été les suivants :

| | | |
|---|---|---|
| - taux de transformation du phénol | : | 85,5 % |
| - rendement réel en saligénol | : | 80 % |
| - rendement théorique en saligénol | : | 93,56 % |
| - rendement réel en alcool p-hydroxybenzylique | : | 1,7 % |

EXEMPLE 6

On a répété l'exemple 4 mais en mettant en oeuvre 0,57 mole de HCHO au lieu de 0,66. La réaction a durée 385 min. Les résultats suivants ont été obtenus :

| | | |
|---|---|---|
| - taux de transformation du phénol | : | 88,3 % |
| - rendement réel en saligénol | : | 83,4 % |
| - rendement théorique en saligénol | : | 94,45 % |
| - rendement réel en alcool p-hydroxybenzylique | : | 3 % |

**Revendications**

1. - Procédé de préparation de métaborates d'aryle à partir d'acide borique et de phénols caractérisé en ce que, dans une première étape, on procède à la déshydratation de l'acide borique en acide métaborique à température inférieure ou égale à 145° C par distillation azéotropique en présence d'un solvant formant avec l'eau un azéotrope de point d'ébullition inférieur ou égal à 170° C puis, dans une deuxième étape, on réalise l'estérification d'un phénol par l'acide métaborique à température inférieure à 170° C en distillant azéotropiquement l'eau de la réaction au fur et à mesure de sa formation.

2. - Procédé de préparation de métaborates d'aryle à partir d'acide borique et de phénols selon la revendication 1, caractérisé en ce que la déshydratation de l'acide borique est conduite à une température comprise entre 130 et 145° C et l'estérification par un phénol de l'acide métaborique ainsi formé à une température comprise entre 140 et 155° C.

3. - Procédé de préparation de métaborates d'aryle à partir d'acide borique et de phénols selon l'une quelconque des revendications 1 à 2 caractérisé en ce que le solvant utilisé est pris dans le groupe des hydrocarbures aromatiques, alkylaromatiques, halogénoaromatiques.

4. - Procédé de préparation de métaborates d'aryle à partir d'acide borique et de phénols selon l'une quelconque des revendications 1 à 3 caractérisé en ce que le phénol utilisé à la deuxième étape répond à la formule générale :

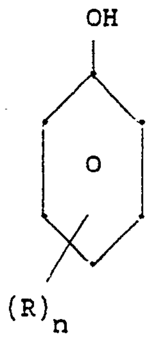

(V)

dans laquelle n est un nombre entier de 1 à 3 et R représente : un radical alcoyle ayant de 1 à 12 atomes de carbone ; un radical alcoyloxyle ayant de 1 à 12 atomes de carbone et un atome d'halogène, l'une au moins des positions en ortho du groupe phénolique étant libre.

5. - Procédé de préparation d'alcools orthohydroxybenzyliques par réactions de formaldéhyde ou d'un composé générateur de formaldéhyde avec des borates d'aryle pour former des borates d'alcools orthohydroxybenzyliques puis décomposition de ce dernier pour libérer les alcools orthohydroxybenzyliques caractérisé en ce que l'on fait réagir le formaldéhyde ou un générateur de formaldéhyde avec un métaborate d'aryle obtenu par le procédé selon l'une quelconque des revendications 1 à 4.

6. - Procédé de préparation d'alcools orthohydroxybenzyliques par réaction de formaldéhyde ou d'un composé générateur de formaldéhyde avec des borates d'aryle pour former des borates d'alcools orthohydroxybenzyliques puis décomposition de ce dernier pour libérer les alcools orthohydroxybenzyliques selon la revendication 5 caractérisé en ce que la température de la condensation formaldéhyde/borate d'aryle est comprise entre 80 et 85° C.

7. - Procédé de préparation de saligénol à partir du métaborate de phényle et de formaldéhyde ou d'un générateur de formaldéhyde caractérisé en ce que

a) dans une première étape on procède à la déshydratation de l'acide borique en acide métaborique à température inférieure ou égale à 145° C par distillation azéotropique en présence d'un solvant formant avec l'eau un azéotrope de point d'ébullition inférieur ou égal à 170° C,

b) dans une deuxième étape on réalise l'estérification du phénol par l'acide métaborique à température inférieure à 170° C en distillant azéotropiquement l'eau de la réaction au fur et à mesure de sa formation,

c) dans une troisième étape on fait réagir le métaborate de phényle avec le formaldéhyde ou un générateur de formaldéhyde puis libère le saligénol par saponification du métaborate de saligénol par une solution aqueuse alcaline.